Europäisches Patentamt

European Patent Office

Office européen des brevets

(11) Numéro de publication: **0 337 827**
**A1**

## DEMANDE DE BREVET EUROPEEN

(21) Numéro de dépôt: **89400673.3**

(22) Date de dépôt: **10.03.89**

(51) Int. Cl.⁴: **H 02 P 3/24**
**D 06 F 37/30**

(30) Priorité: **11.03.88 FR 8803190**

(43) Date de publication de la demande:
**18.10.89 Bulletin 89/42**

(84) Etats contractants désignés: **DE ES FR IT SE**

(71) Demandeur: **CIAPEM**
**137, rue de Gerland**
**F-69007 - Lyon (FR)**

(72) Inventeur: **Kubacsi, Michel**
**THOMSON-CSF SCPI-Cédex 67**
**F-92045 Paris la Défense (FR)**

(74) Mandataire: **Phan, Chi Quy et al**
**THOMSON-CSF SCPI**
**F-92045 PARIS LA DEFENSE CEDEX 67 (FR)**

(54) **Procédé d'arrêt positionné d'un appareil muni d'un tambour horizontal entraîné par un moteur électrique asynchrone, et machine à laver et/ou à sécher le linge mettant en oeuvre ce procédé.**

(57) Procédé d'arrêt positionné d'un appareil (1) muni d'un tambour horizontal (5) entraîné en rotation par un moteur électrique asynchrone (6), caractérisé en ce qu'il comprend une signalisation de la position du tambour (5), une interruption d'une alimentation électrique en mode normal de fonctionnement du moteur électrique d'entrainement (6) et une alimentation en mode d'arrêt de ce moteur électrique dans laquelle (6), le courant électrique injecté dans ce dernier est un courant du type redressé représentant une composante continue réglable y créant un freinage électromagnétique à puissance ajustable réalisant à l'arrêt de ce moteur (6) et ce tambour (5), un bon alignement de la porte (7) de ce tambour (5) avec la porte (4) de l'appareil (1). Ce freinage est séquencé dans le temps par un top de synchronisation fourni par un capteur de position.

FIG.1

Bundesdruckerei Berlin

**Description**

## PROCEDE D'ARRET POSITIONNE D'UN APPAREIL MUNI D'UN TAMBOUR HORIZONTAL ENTRAINE PAR UN MOTEUR ELECTRIQUE ASYNCHRONE ET MACHINE A LAVER ET/OU A SECHER LE LINGE METTANT EN OEUVRE CE PROCEDE

La présente invention concerne un procédé d'arrêt positionné d'un appareil muni d'un tambour horizontal entraîné en rotation par un moteur électrique asynchrone et une machine à laver et/ou à sécher le linge mettant en oeuvre ce procédé.

Les appareils à tambour horizontal entraînés en rotation par un moteur électrique tels que les machines à laver et/ou à sécher le linge à tambour horizontal ont un inconvénient d'avoir à leur arrêt en fin d'une opération choisie souvent leur tambour ne présentant pas sa porte en bon alignement avec la porte de ces appareils. Dans un lave-linge par exemple, pour retirer le linge à la fin d'un lavage, l'utilisateur est obligé de tourner manuellement le tambour pour mettre sa porte en bon alignement avec la porte de chargement de l'appareil. Dans cette opération, il risque d'être blessé par des aspérités de la paroi perforée de ce tambour.

Dans certaines machines à laver et/ou à sécher le linge connues existent bien des dispositifs d'arrêt rapide des tambours à linge. Cependant, ces dispositifs d'arrêt rapide répondent moins à un bon alignement recherché des portes des tambours à linge avec celles des machines qu'aux mesures de sécurité exigeant dans ces machines, que leur tambour à linge soit préalablement arrêté dans leur rotation avant que la porte de ces machines ne soit ouverte pour éviter tout accident corporel.

Pour cette raison, ces dispositifs d'arrêt rapide ne comportent pas de moyens adéquats permettant d'obtenir lors d'un arrêt de ces machines un bon alignement de la porte de chargement de ces machines avec la porte de leur tambour.

La présente invention visant à éviter ces inconvénients a pour objet un procédé d'arrêt positionné d'un appareil à tambour horizontal entraîné en rotation par un moteur électrique asynchrone tel qu'une machine à laver et/ou à sécher le linge qui permet d'obtenir non seulement un arrêt rapide du tambour lors d'une commande d'arrêt de l'appareil, lors d'un arrêt en fin d'un cycle choisi de fonctionnement ou lors d'une ouverture de la porte de l'appareil, pour répondre aux mesures de sécurité mais également un bon alignement de la porte du tambour avec la porte de la machine pour faciliter un accès à ce tambour.

Elle a également pour object une machine à laver et/ou à sécher le linge mettant en oeuvre ce procédé. Selon l'invention, un procédé d'arrêt positionné d'un appareil muni d'un tambour horizontal entraîné en rotation par un moteur électrique asynchrone, comportant une interruption d'une alimentation en mode normal de fonctionnement de ce moteur électrique d'entraînement en courant alternatif puis une alimentation électrique de ce moteur en mode d'arrêt, par injection dans ce dernier encore en rotation par inertie d'un courant électrique du type de courant redressé présentant une composante continue y créant un freinage électromagnétique, est caractérisé en ce qu'il comprend une signalisation de la position du tambour, une interruption d'une alimentation électrique en mode normal de fonctionnement du moteur électrique d'entraînement et une alimentation en mode d'arrêt de ce moteur électrique dans laquelle le courant électrique injecté dans ce dernier est un courant du type redressé représentant une composante continue réglable y créant un freinage électromagnétique à puissance ajustable réalisant à l'arrêt de ce moteur et ce tambour, un bon alignement de la porte de ce tambour avec la porte de l'appareil.

Pour mieux faire comprendre l'invention, on en déduit ci-après un certain nombre d'exemples de réalisation illustrés par des dessins ci-annexés dont :

- la figure 1 représente une vue en perspective schématique, partiellement arrachée d'un sèche-linge mettant en oeuvre un procédé d'arrêt suivant l'invention ;

- la figure 2 représente un schéma d'une partie d'un circuit électrique d'un premier exemple de réalisation assurant une commande de fonctionnement d'un moteur d'entraînement du sèche-linge de la figure 1, et mettant en oeuvre le procédé d'arrêt suivant l'invention ;

- la figure 3 représente en fonction du temps respectivement en A une courbe de tension électrique d'une source électrique $P_1$ $P_2$ alimentant le circuit électrique entre $P_1$ et $P_2$ de la figure 2, en B un exemple de courbe de courant électrique traversant le moteur d'entraînement faisant partie de ce circuit électrique, et en C une courbe correspondant de courant électrique de commande destiné à obtenir ce courant électrique B traversant ce moteur d'entraînement, $\theta_G$ étant l'angle d'ouverture de la commande pour assurer l'allumage, avec $0 < \theta_G < 180°C$ ;

- la figure 4 représente en fonction du temps, respectivement en D une courbe de tension électrique alimentant le circuit électrique de la figure 2, en E un autre exemple de courbe de courant électrique traversant le moteur d'entraînement faisant partie de ce circuit électrique et en F une courbe correspondante de courant électrique de commande destiné à obtenir ce courant électrique E traversant ce moteur d'entraînement ;

- la figure 5 représente en fonction du temps respectivement en G une courbe de tension électrique alimentant le circuit électrique de la figure 2, en H un autre exemple de courbe de courant électrique traversant le moteur d'entraînement faisant partie de ce circuit électrique et en K une courbe correspondante du courant électrique de commande destiné à obtenir ce courant électrique H traversant ce moteur d'entraînement, avec un temps de retard à

l'amorçage$\theta_A$ différent de celui $\theta_B$ ;

- la figure 6 représente un schéma d'une partie d'un circuit électrique suivant un autre exemple de réalisation, assurant une commande de fonctionnement du moteur d'entraînement du sèche-linge de la figure 1, et mettant en oeuvre le procédé d'arrêt suivant l'invention ;

- la figure 7 représente un schéma d'une partie d'un circuit électrique suivant un autre exemple de réalisation assurant une commande de fonctionnement d'un moteur d'entraînement du sèche-linge de la figure 1, et mettant en oeuvre le procédé d'arrêt suivant l'invention,

- la figure 8 représente un schéma d'un commutateur du circuit électrique de la figure 7, et

- la figure 9 représente, à une autre échelle schématiquement et partiellement, un tambour et un dispositif de signalisation de position un autre exemple de réalisation du sèche-linge de la figure 1.

La présente invention est applicable à une machine à laver le linge, à une machine à sécher le linge, à une lavante-séchante, à un centrifugeur ou à un appareil ayant un tambour entraîné en rotation suivant un axe horizontal par un moteur électrique asynchrone et muni d'une porte qui devrait être en bon alignement avec la porte de l'appareil à l'arrêt de ce tambour consécutif à une commande d'arrêt de cet appareil ou à un arrêt en fin d'un cycle choisi de fonctionnement de l'appareil ou à une ouverture intempestive de la porte de cet appareil dans le cas où la sécurité n'est pas assurée par un blocage habituel de la porte de l'appareil tant que l'alimentation électrique n'est pas coupée durant le fonctionnement de l'appareil.

Pour simplifier l'exposé de l'invention, une application à un sèche-linge est seule décrite ci-après.

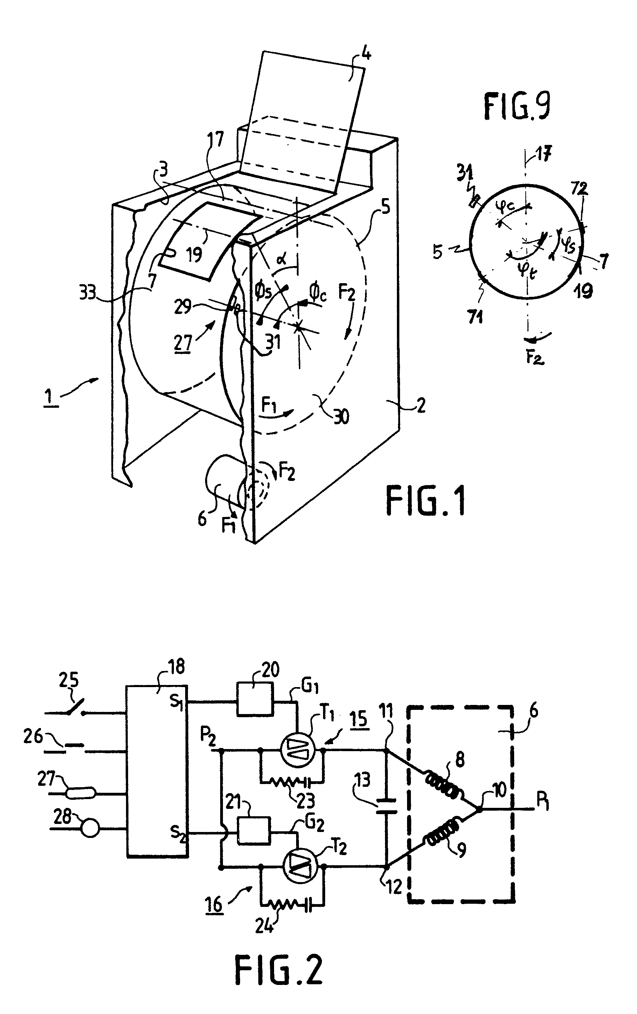

Un sèche-linge 1 partiellement et schématiquement illustré dans la figure 1 comprend au moins une carrosserie 2 munie d'une entrée 3 fermée par une porte 4 et un tambour horizontal à linge 5 entraîné en rotation par un moteur électrique 6 et pourvu d'une porte 7. Pour faciliter un retrait du linge du tambour 5, il est souhaitable que lors d'une commande d'arrêt, lors d'un arrêt en fin d'un cycle choisi de fonctionnement ou lors d'une ouverture intempestive de la porte 4 du sèche-linge 1, le tambour 5 s'immobilise rapidement et présente à son arrêt sa porte 7 en bon alignement avec l'entrée 3 fermée par la porte 4 du sèche-linge 1, autrement dit en bon alignement avec cette porte 4.

Selon l'invention, un procédé d'arrêt positionné d'un appareil muni d'un tambour horizontal entraîné en rotation par un moteur électrique comprend au moins une signalisation de la position du tambour, une interruption d'une alimentation en courant électrique alternatif en mode normal de fonctionnement de ce moteur électrique asynchrone d'entraînement puis une alimentation électrique de ce moteur en mode d'arrêt par injection dans ce dernier encore en rotation par inertie, d'un courant électrique du type courant redressé présentant une composante continue y créant un freinage électromagnétique.

Selon une autre caractéristique, dans l'alimentation électrique en mode d'arrêt de ce moteur, le courant électrique injecté est un courant de type redressé présentant une composante continue réglable y créant un freinage électromagnétique à puissance ajustable réalisant à l'arrêt de ce moteur et de ce tambour un bon alignement de la porte de ce tambour horizontal avec la porte de cet appareil.

Selon une autre caractéristique, un procédé d'arrêt positionné d'un appareil dans lequel le tambour à linge est entraîné par le moteur électrique asynchrone ayant deux enroulements statoriques et un condensateur permanent ou capacité de démarrage comprend une interruption d'une alimentation en cours en courant alternatif en mode normal de fonctionnement, de l'un de ces deux enroulements statoriques, puis une alimentation de ce moteur en mode d'arrêt, par injection dans l'autre de ces deux enroulements statoriques de ce moteur encore en rotation par inertie, d'un courant électrique du type courant redressé présentant une composante continue y créant un freinage électromagnétique.

Selon une autre caractéristique, un procédé d'arrêt positionné d'un appareil ayant une ouverture fermée par une porte et dans lequel le tambour-horizontal muni d'une porte et son moteur d'entraînement tournent dans les deux et mêmes sensde rotation, comprend quand le tambour tourne dans un de ces deux sens de rotation, une signalisation de la position du tambour, une interruption d'une alimentation en courant électrique alternatif en mode normal de fonctionnement de ce moteur, puis une alimentation électrique de ce moteur d'entraînement en mode d'arrêt dès que la position médiane de la porte de ce tambour se trouve à un angle préréglé alpha ($\alpha$) vis-à-vis de la position médiane de l'ouverture de la porte de l'appareil et quand le tambour tourne dans l'autre de ces deux sens de rotation, une interruption d'une alimentation en courant électrique alternatif en mode normal de fonctionnement de ce moteur, puis une alimentation électrique de ce moteur d'entraînement en mode d'arrêt, dès que la position médiane de la porte de ce tambour se trouve à un angle ($2\pi - \alpha$) qui est symétrique de cet angle alpha ($\alpha$) vis-à-vis de la position médiane de l'ouverture de la porte de l'appareil.

Selon une autre caractéristique, un procédé d'arrêt positionné d'un appareil muni d'un tambour horizontal entraîné en rotation par un moteur électrique asynchrone dans les deux et mêmes sens de rotation que ceux de ce moteur comprend une mise en rotation de ce moteur dans un sens de rotation prédéterminé pour arrêt ou freinage, une signalisation de la position du tambour, une interruption d'une alimentation en courant électrique alternatif en mode normal de fonctionnement de ce moteur électrique asynchrone d'entraînement puis une alimentation électrique de ce moteur en mode d'arrêt par injection dans ce moteur encore en rotation par inertie, d'un courant électrique du type courant redressé présentant une composante continue y créant un freinage électromagnétique.

Selon une autre caractéristique, un procédé d'arrêt positionné d'un appareil muni d'un tambour horizontal entraîné en rotation par un moteur électrique asynchrone comprend une alimentation électrique de ce moteur d'entraînement au moyen d'au moins un triac dont la gâchette est alimentée en continu en courant, positif ou négatif selon le triac choisi, ou en courant sous forme de signaux carrés périodiques ayant une fréquence double de celle de la tension de la source d'alimentation électrique et synchrone avec les passages à zéro de cette même tension durant une alimentation en mode normal de fonctionnement de ce moteur, et en courant, positif ou négatif selon le triac choisi, sous forme de signaux carrés à la fréquence de la tension de la source d'alimentation, à durée réglable et à début avec un temps de retard ajustable vis à vis de celui de la tension appliquée aux bornes de ce triac, durant une alimentation en mode d'arrêt de ce moteur.

Selon une autre caractéristique un procédé d'arrêt positionné d'un appareil muni d'un tambour horizontal entraîné en rotation par un moteur électrique asynchrone comprend une alimentation électrique de ce moteur d'entraînement au moyen d'au moins d'une part un relais électromécanique durant une alimentation en courant électrique alternatif en mode normal de fonctionnement de ce moteur et d'autre part d'un triac dont la gâchette est alimentée en courant positif sous forme de signaux carrés à durée réglable et à début avec un temps de retard ajustable vis à vis de celui de la tension appliquée aux bornes de ce triac, durant une alimentation en mode d'arrêt de ce moteur.

Selon une autre caractéristique un procédé d'arrêt positionné d'un appareil muni d'un tambour horizontal entraîné en rotation par un moteur électrique comprend une alimentation électrique de ce moteur d'entraînement au moyen d'au moins d'une part un relais électromécanique durant une alimentation en courant électrique alternatif, en mode normal de fonctionnement de ce moteur, et d'autre part un relais statique du type thyristor durant une alimentation en mode d'arrêt de ce moteur, en courant électrique redressé.

Dans un premier exemple illustré dans les figures 2 à 5, le sèche-linge 1 qui met en oeuvre ce procédé d'arrêt comprend un tambour à linge 5 entraîné par un moteur électrique asynchrone 6 et tournant dans les mêmes sens de rotation $F_1$ et $F_2$ que ceux de ce moteur. Le moteur électrique d'entraînement 6 comprend deux enroulements statoriques 8 et 9 dont les premières extrémités sont reliées à un point commun 10 et les deuxièmes extrémités 11 et 12 sont connectées aux bornes d'un condensateur permanent ou capacité de démarrage 13.

L'enroulement rotorique non représenté du moteur 6 est un enroulement en court-circuit d'un type connu.

Les enroulements statoriques 8 et 9 du moteur 6 sont branchés par le point commun 10 de leurs premières extrémités à une première borne $P_1$ d'une source de courant électrique alternatif $P_1$ $P_2$ et par leur deuxièmes extrémités 11 et 12 individuellement à une deuxième borne $P_2$ de la source électrique $P_1$

$P_2$ à travers respectivement deux commutateurs 15 et 16 constitués dans cet exemple par des triacs $T_1$ et $T_2$. Les commutateurs 15 et 16 sont commandés dans leur fonctionnement par un circuit électronique d'un type connu ou microprocesseur 18. Dans l'exemple illustré à la figure 2, les triacs $T_1$ et $T_2$ ont leurs gâchettes $G_1$ et $G_2$ reliées aux sorties $S_1$ et $S_2$ du circuit électronique ou microprocesseur 18. Les courants de commande des gâchettes $G_1$ et $G_2$ des triacs $T_1$ et $T_2$ peuvent être amplifiés respectivement par des amplificateurs 20, 21. Les triacs $T_1$ et $T_2$ sont protégés d'un allumage intempestif respectivement par des circuits connus 23, 24 de type RC. Dans l'alimentation électrique de moteur d'entraînement 6, l'enroulement 8 constitue l'enroulement principal et l'enroulement 9 avec le condensateur 13 forme l'enroulement auxiliaire quand le moteur 6 tourne dans le sens $F_1$ et l'enroulement 8 avec le condensateur 13 devient l'enroulement auxiliaire et l'enroulement 9 constitue l'enroulement principal quand le moteur 6 tourne dans le sens $F_2$.

Le circuit électronique ou microprocesseur 18 qui reçoit les données de l'état de fermeture ou d'ouverture d'un interrupteur de sécurité 25 de porte 4 de l'appareil 1, celles d'un bouton poussoir 26 de commande d'arrêt de l'appareil, des données d'un dispositif 27 de signalisation de position du tambour à linge 5 et de capteurs de température 28, fonctionne avec les commutateurs associés 15 et 16 soit comme un interrupteur-inverseur dans la réalisation des opérations préétablies suivant des programmes de travail prédéterminés choisis en alimentant le moteur d'entraînement 6 en courant alternatif, en mode normal de fonctionnement soit comme un redresseur dans un arrêt de l'appareil, en alimentant en mode d'arrêt en courant électrique redressé réglable le moteur 6, suivant un processus préétabli de freinage ou d'arrêt.

Dans une alimentation électrique en mode normal de fonctionnement du moteur 6 et selon le sens de rotation $F_1$ ou $F_2$ souhaité de ce moteur, le commutateur 15 ou 16 c'est-à-dire le triac $T_1$ ou $T_2$ laisse passer normalement les alternances positives et négatives du courant électrique à travers les enroulements statoriques de ce moteur, sa gâchette $G_1$ ou $G_2$ étant alimentée en continu en courant électrique positif ou négatif selon le triac choisi ou en courant sous forme de signaux carrés périodiques à une fréquence double de celle de la tension de la source d'alimentation et synchrones aux passages à zéro de cette même tension, par le circuit électronique ou microprocesseur 18.

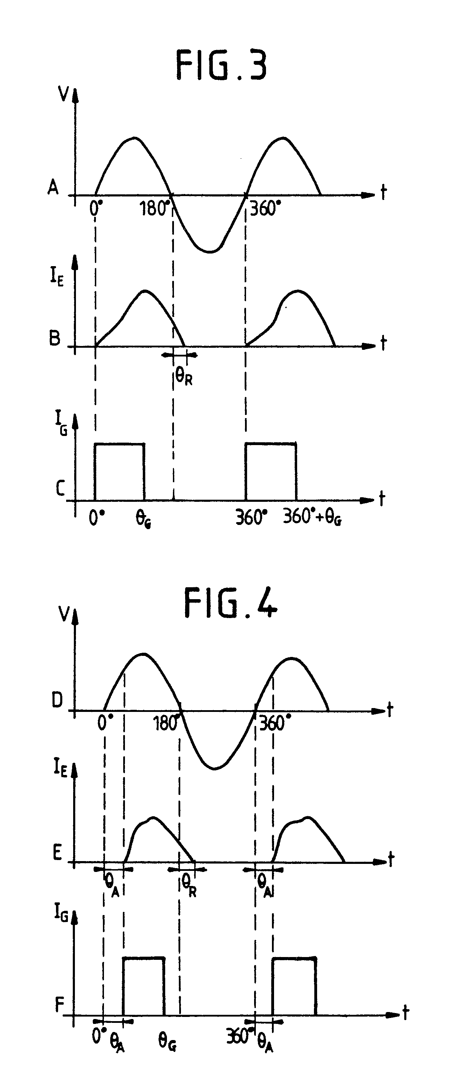

Dans une alimentation électrique en mode d'arrêt du moteur 6 et selon l'enroulement 8 ou 9 de ce moteur 6 constituant un enroulement principal, le commutateur 15 ou 16 c'est-à-dire le triac $T_1$ ou $T_2$ fonctionne en redresseur à courant redressé réglable et laisse passer une partie réglable des alternances positives et/ou négatives du courant électrique (courbe B,E,H, figures 3,4,5) à travers cet enroulement statorique 8 ou 9 de ce moteur qui constitue un enroulement principal, sa gâchette $G_1$ ou $G_2$ étant alimentée en courant électrique, positif ou négatif selon le triac choisi, sous forme de signaux carrés périodiques à la fréquence de la source d'alimentation (courbes C,F,K, figures 3,4,5) en synchronisation avec la tension électrique de la source d'alimentation $P_1$ $P_2$ (courbes A,D,G, figures 3,4,5) mais à durée et à retard réglables.

Dans le premier exemple illustré aux figures 1 et 2, le tambour à linge 5 tourne dans les deux sens de rotation $F_1$ et $F_2$ durant le fonctionnement du sèche-linge 1 et les triacs $T_1$ et $T_2$ sous la commande du circuit électronique ou microprocesseur 18 alimentent en mode normal de fonctionnement à la manière d'un inverseur interrupteur en courant alternatif, alternativement les enroulements du moteur électrique d'entraînement 6. Le triac $T_1$ alimente l'enroulement 8 comme enroulement principal pour faire tourner le moteur 6 dans le sens de rotation $F_1$ et le triac $T_2$ alimente l'enroulement 9 comme enroulement principal pour faire tourner le moteur 6 dans le sens de rotation F2.

Le dispositif 27 de signalisation de position du tambour à linge 5 comprend un aimant permanent 29 fixé sur un point d'un bord d'un flasque 30 de ce tambour 5, en amont de la porte 7 de ce tambour 5 par rapport à un sens de rotation $F_2$ de ce dernier, choisi arbitrairement comme un sens de rotation pour arrêt ou freinage, le sens de rotation $F_1$ étant dans cet exemple un sens de rotation dit sens neutre et la position du point de fixation de l'aimant 29 faisant un angle $\varphi_S$ avec la position médiane 19 de la porte 7 du tambour 5, et un capteur de champ magnétique 31 fixé sur la carrosserie 2 à proximité du bord de ce flasque 30 parallèlement au trajet de cet aimant permanent 29, en un point en amont de la porte 4 du sèche-linge 1, par rapport au sens de rotation pour arrêt $F_2$ de ce tambour 5, la position du point de fixation du capteur 31 faisant un angle $\varphi_C$ avec la position médiane 17 de l'ouverture 3 de la porte 4 de l'appareil. La position médiane 19 de la porte 7 du tambour 5 définit avec la position médiane 17 de l'ouverture 3 de la porte 4 de l'appareil un angle alpha ($\alpha$). Le capteur de champ magnétique 31 qui est choisi parmi une bobine d'un relais électromagnétique, un relais à lames à actionnement magnétique communément appelé relais "Reed", une cellule à effet Hall, etc..., émet lors d'un passage de l'aimant permanent 29 à sa proximité un top destiné à déclencher dans le circuit électronique ou microprocesseur 18 une alimentation électrique en mode d'arrêt du moteur d'entraînement 6.

A la fin d'un programme de fonctionnement choisi ou lors d'une ouverture par inadvertance de la porte du sèche-linge 1 à laquelle est associée l'interrupteur de sécurité 25 ou lors d'un ordre de commande d'arrêt du sèche-linge 1 par actionnement d'un bouton poussoir 26, le tambour à linge 5 et son moteur d'entraînement tournent alors soit suivant leur sens de rotation dit sens neutre $F_1$, soit suivant leur sens de rotation prédéterminé pour arrêt ou freinage $F_2$.

Dans le cas où le tambour à linge 5 et son moteur d'entraînement 6 tournent dans leur sens de rotation prédéterminé pour arrêt ou freinage $F_2$, le circuit électronique ou microprocesseur 18 interrompt l'alimentation électrique en mode normal de fonctionnement de ce moteur d'entraînement 6, met en oeuvre un processus préétabli de freinage ou d'arrêt, et déclenche une alimentation électrique en mode d'arrêt de ce moteur d'entraînement 6 dès réception d'un top envoyé par le capteur de champ magnétique 31 du dispositif 27 de signalisation de position du tambour à linge 5.

Autrement dit le circuit électronique ou microprocesseur 18 coupe l'alimentation en courant électrique de la gâchette $G_2$ du triac $T_2$ (figure 2) dès qu'un top est envoyé par le capteur de champ 31 du dispositif de signalisation de position 27, puis alimente la gâchette $G_1$ du triac $T_1$ en courant sous forme de signaux carrés périodiques à la fréquence de la tension de la source d'alimentation, à durée et à retard à l'allumage prédéterminés (courbe C - figure 3).

Le triac $T_1$ envoie ainsi dans l'enroulement statorique 8 ou enroulement principal de ce moteur 6 un courant positif redressé $I_E$ du type à simple alternance (courbe B - figure 3), les alternances négatives étant bloquées puisqu'au moment de changement de signes du courant $I_E$ qui est en retard par rapport au changement de signes de la tension, d'un angle électrique téta R ($\theta_R$), le signal carré de commande correspondant, de la gâchette $G_1$ est nul. Le courant positif redressé $I_E$ envoyé dans l'enroulement statorique 8 présente une composante continue qui crée dans le moteur 6 un champ ou flux magnétique continu ou constant, tandis que la composante continue dans l'enroulement statorique 9 ou enroulement auxiliaire de ce moteur 6 est pratiquement nulle du fait de la présence du condensateur 13 en série avec cet enroulement 9. Soumis à l'action d'un flux magnétique constant, l'enroulement en court-circuit du rotor de ce moteur 6 encore en rotation par inertie, fonctionne comme un enroulement d'un induit d'un alternateur, et absorbe de la puissance mécanique et oppose par conséquent à ce rotor en mouvement un couple de freinage. Ce couple de freinage est réglable par l'intensité du courant redressé envoyé dans l'enroulement statorique 8 laquelle est rendue ajustable (entre une valeur maximale où le courant redressé est formé par des alternances positives entières et une valeur nulle où le courant redressé est nul), par le temps de retard à l'amorçage téta A ($\theta_A$) (courbes E.F - figure 4) imposé à la gâchette $G_1$ du triac $T_1$ entre une valeur de téta A nulle( $\theta_A = 0°$) et une valeur de téta A égale à 180° ($\theta_A = 180°$). Ce temps de retard à l'amorçage téta $_A$ de la gâchette $G_1$ ainsi que la durée du freinage sont contrôlés par le circuit électronique ou microprocesseur 18.

l'intensité du courant redressé traversant le triac $T_1$ est ajustée pour que le couple de freinage du rotor, encore en rotation par inertie, de ce moteur d'entraînement 6 soit suffisamment fort et que l'arrêt du tambour à linge 5 entraîné par ce moteur 6 soit quasi instantané, tandis que l'aimant permanent 29 et le capteur de champ magnétique 31 du dispositif 27 de signalisation de position du tambour 5 sont fixés respectivement sur le bord de ce tambour 5, en un point relativement proche de la porte 4 de l'appareil 1 pour que l'arrêt soit effectif quand l'espace angulaire est parcouru (figure 1) c'est-à-dire dans un temps TA à partir du top envoyé par le capteur 31 du dispositif de signalisation 27, avec

$T_A = \frac{\alpha}{\omega}$ ou $T_A = \frac{\varphi_C - \varphi_S}{\omega}$

où w est la vitesse du tambour 5 et $\alpha, \varphi_C, \varphi_S$ sont déjà définis dans un paragraphe précédent et qu'à l'arrêt de ce tambour à linge 5 la porte 7 de ce tambour soit en bon alignement avec la porte 4 de cet appareil 1, autrement did la position médiane 19 de la porte 7 du tambour 5 se trouve dans l'alignement de la position médiane 17 de l'ouverture 3 de la porte 4 de l'appareil 1.

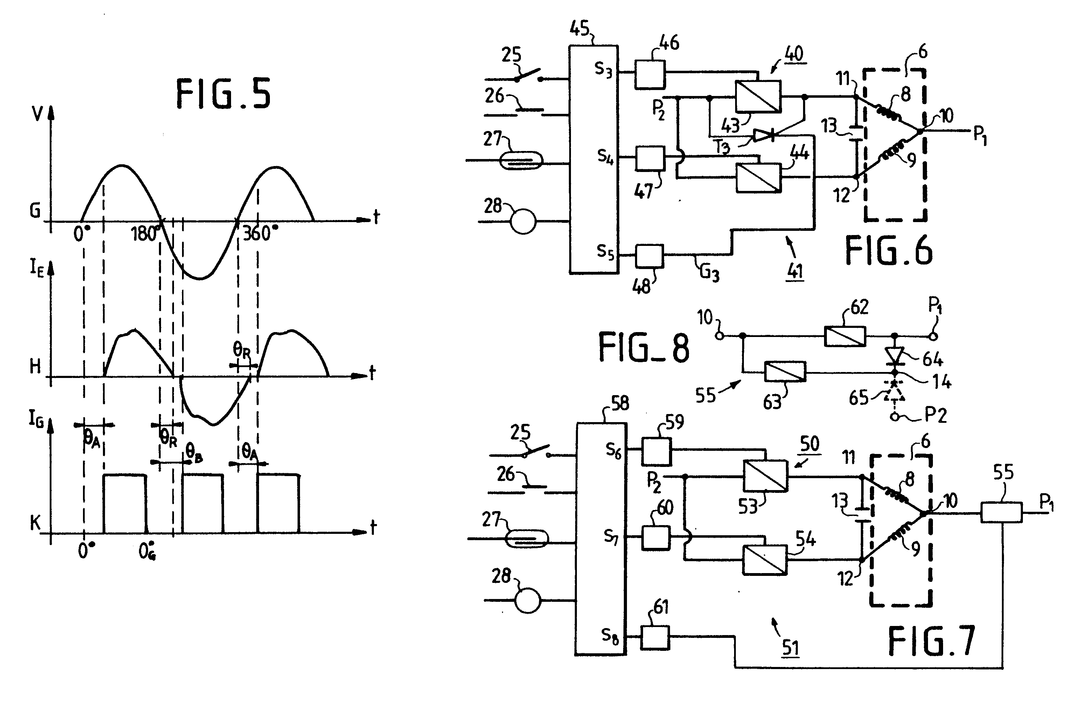

Quand le couple de freinage du moteur d'entraînement 6 s'avère trop fort c'est-à-dire trop brutal et que le réglage de ce coupe de freinage par la modulation du temps de retard à l'amorçage entre $\theta_A = 0°$ et $\theta_A = 180°$ ne soit suffisante, l'amorçage de la gâchette $G_2$ du triac $T_2$ se fait à la fois, pour l'alternance positive entre $\theta_A = 0°$ et $\theta_A = 180°$, et pour l'alternance négative entre $\theta_B = 180° + \theta_R$ et $\theta_B = 360°$ avec $\theta_B$ différent de $\theta_A, \theta_R$ étant le temps de retard de changement de signes du courant par rapport au changement de signes de la tension (courbes G,H,K - figure 5), de façon à réduire encore la composante continue du courant redressé.

Dans le cas où tambour à linge 5 et son moteur d'entraînement 6 tournent dans le sens de rotation dit sens neutre $F_1$ lors d'une ouverture par inadvertance de la porte 4 du sèche-linge ou lors d'un ordre de commande d'arrêt du sèche-linge 1 par actionnement bouton poussoir 26, le circuit électronique ou le microprocesseur 18 attend le top de synchronisation envoyé par le capteur de champ magnétique 31 du dispositif 27 de signalisation de position du tambour à linge 5. Après réception, le circuit électronique ou microprocesseur 18 coupe l'alimentation en mode normal de fonctionnement de ce moteur d'entraînement 6 par la coupure de l'alimentation du triac $T_1$ avec un temps de retard TR, avec

$$T_R = \frac{2\pi - 2\alpha}{\omega} \text{ ou}$$

$$T_R = \frac{2\pi - 2(\varphi_C + \varphi_S)}{\omega}$$

où w est la vitesse de rotation du tambour en radians par seconde, $\varphi_C$ est l'angle de la position du capteur de champ magnétique 31 par rapport à la position médiane 17 de l'ouverture d'entrée 3 du sèche-linge, $\varphi_S$ est l'angle de la position médiane 19 de la porte 7 du tambour 5 par rapport à la position de l'aimant 29 du dispositif 27, $\varphi_C$ et $\varphi_S$ sont pris positivement dans le sens de rotation $F_1$, et envoie un courant sous forme de signaux carrés périodiques à la fréquence de la source d'alimentation sur la gâchette $G_2$ du triac $T_2$.

Le triac $T_2$ envoie ainsi dans l'enroulement statorique 9 une composante continue qui génère l'action de freinage comme décrit précédemmment.

Le temps de retard $T_R$ permet de générer l'action de freinage pour une rotation en sens $F_1$ dans une position symétrique (angle $2\pi - \alpha$), par rapport à la position médiane 17 de l'ouverture d'entrée 3 du sèche-linge 1 (figure 1), à celle de l'action de freinage par une rotation en sens $F_2$ (angle $\alpha$), de manière qu'à l'arrêt, la porte 7 du tambour 5 soit en bon alignement avec l'ouverture d'entrée 3 du sèche-linge 1. La reconnaissance du sens de rotation $F_1$ ou $F_2$ du tambour 5 est faite d'une manière connue par le circuit électronique ou microprocesseur 18. Dans tous les cas, le freinage peut être réalisé aussi bien à travers le triac $T_1$ et l'enroulement statorique 8 qu'à travers le triac $T_2$ et l'enroulement statorique 9. Cependant, un mode de freinage préféré est le suivant : si l'alimentation du moteur d'entraînement 6 se fait en mode normal de fonctionnement par l'un des deux triacs $T_1$ et $T_2$, par exemple le triac $T_1$, l'alimentation normale de ce triac $T_1$ est coupée et un courant sous forme de signaux carrés périodiques de fréquence égale à la fréquence de la tension de la source d'alimentation est alors envoyé sur la gâchette de l'autre des deux triacs c'est-à-dire sur la gâchette du triac $T_2$ dans l'hypothèse émise, pour générer une composante continue dans le stator du moteur 6 de façon à créer l'action de freinage. Autrement dit selon ce mode préféré, dans un freinage du tambour linge 5 entraîné par le moteur électrique asynchrone 6 ayant deux enroulements statoriques 8 et 9 et un condensateur permanent ou capacité de démarrage 13, une alimentation en cours en courant alternatif en mode normal de fonctionnement, de l'un de ces deux enroulements statoriques est coupée puis une alimentation en mode d'arrêt de ce moteur encore en rotation par inertie est établie par injection dans l'autre de ces deux enroulements statoriques, d'un courant électrique du type de courant redressé présentant une composante continue y créant un freinage électromagnétique. Un freinage opéré selon ce mode préféré se révèle plus performant que celui effectué par une coupure de l'alimentation en cours en courant alternatif en mode normal de fonctionnement de l'une de ces deux enroulements statoriques, suivie d'une alimentation en mode d'arrêt en courant du type redressé, de ce même enroulement statorique.

Selon une variante de réalisation, dans le cas comme celui ci-dessus où le tambour à linge 5 et son moteur d'entraînement 6 tournent dans le sens de rotation dit sens neutre $F_1$, lors d'une ouverture par inadvertance de la porte 4 du sèche-linge 1 ou lors d'un ordre de commande d'arrêt du sèche-linge 1 par actionnement du bouton poussoir 26, le circuit électronique ou microprocesseur 18 interrompt l'alimentation du moteur d'entraînement 6 à travers le triac $T_1$ qui le fait tourner dans le sens $F_1$, inverse le sens de rotation de ce moteur en $F_2$ ou sens de rotation prédéterminé pour arrêt en l'alimentant à travers le triac $T_2$, met en oeuvre un processus préétabli de freinage ou d'arrêt, et déclenche une alimentation électrique en mode d'arrêt de ce moteur 6 dès réception d'un top envoyé par le capteur de champ magnétique 31 du dispositif 27 de signalisation de position du tambour à linge 5 comme ce qui est exposé dans des paragraphes plus haut.

Dans un deuxième exemple non représenté, le sèche-linge 1 comprend des éléments identiques à ceux du premier exemple ci-dessus (figures 1 et 2) à l'exception du fait qu'un des triacs $T_1$ ou $T_2$ est remplacé par un relais électromécanique. Le freinage se fait à travers le triac restant et le résultat est analogue à celui du premier exemple.

Dans un troisième exemple de réalisation illustré schématiquement et partiellement dans la figure 6, le sèche-linge 1 comprend comme dans le premier exemple un tambour à linge 5 entraîné par un moteur électrique asynchrone 6 à deux enroulements statoriques 8 et 9 et tournant dans les mêmes sens de rotation $F_1$ et $F_2$ que ceux de ce moteur. L'enroulement rotorique non représenté du moteur 6 est un enroulement en court-circuit d'un type connu. Les enroulements statoriques 8 et 9 ont leurs premières extrémités reliées à un point commun 10 et leurs deuxièmes extrémités 11 et 12 sont connectées aux bornes d'un condensateur permanent ou capacité de démarrage 13. Ces enroulements statoriques 8 et 9 sont branchés par le point 10 de leurs premières extrémités à une première borne $P_1$ d'une source de courant alternatif $P_1$ $P_2$ et par leurs deuxièmes extrémités 11 et 12 individuellement à une deuxième borne $P_2$ de cette source électrique $P_1$ $P_2$ à travers respectivement deux commutateurs 40 et 41. Le premier commutateur 41 est constitué par un relais électromécanique 44 et le deuxième commutateur 40 est formé d'un relais électromécanique 43 et d'un commutateur statique tel qu'un thyristor $T_3$ montés en parallèle.

Dans l'exemple illustré, les bobines de commande des relais 43 et 44 et la gâchette $G_3$ du thyristor $T_3$ sont respectivement reliées aux sorties $S_3$, $S_4$, $S_5$ d'un circuit électronique ou microprocesseur 45 à travers, le cas échéant, des amplificateurs de courant 46, 47, 48.

Le circuit électronique ou microprocesseur 45 qui reçoit des données de l'état de fermeture ou d'ouverture d'un interrupteur de sécurité 25 de porte 4 de l'appareil 1, celles d'un bouton poussoir 26 de commande d'arrêt de l'appareil, des données d'un dispositif 27 de signalisation de position du tambour à linge 5 et de capteurs de températures 28, fonctionne soit avec les relais électromécaniques associés 43,44 comme un interrupteur-inverseur pour commander le moteur 6 et le faire tourner dans les deux sens, un sens de rotation dit sens neutre $F_1$ et un sens de rotation prédéterminé pour arrêt $F_2$ durant un fonctionnement normal du sèche-linge 1, soit avec le thyristor $T_3$ comme un redresseur dans un arrêt du sèche-linge 1, en alimentant ce moteur 6 en courant redressé réglable suivant un processus préétabli de freinage ou d'arrêt.

A la fin d'un programme de fonctionnement choisi ou lors d'une ouverture par inadvertance de la porte 4 du sèche-linge 1 à laquelle est associé l'interrupteur de sécurité 25 ou lors d'un ordre de commande d'arrêt du sèche-linge 1 par actionnement du bouton poussoir 26, le tambour à linge 5 et son moteur d'entraînement 6 tournant alors soit suivant leur sens de rotation dit sens neutre $F_1$, soit suivant leur sens de rotation prédéterminé pour arrêt ou freinage $F_2$.

Dans le cas où le tambour à linge 5 et son moteur 6 tournent à ce moment dans leur sens de rotation prédéterminé pour arrêt $F_2$, le circuit électronique ou microprocesseur 45 coupe alors l'alimentation du moteur 6 par le relais 44 dès qu'un top est envoyé par le capteur de champs 31 du dispositif 27 de signalisation de position du tambour à linge 5, puis alimente la gâchette $G_3$ du thyristor $T_3$ en courant $I_G$ sous forme de signaux carrés périodiques à la fréquence de la source d'alimentation, à durée et à retard à l'amorçage prédéterminés (courbes : C-figure 3; F-figure 4 ; K-figure 5). Le thyristor $T_3$ envoie dans l'enroulement statorique 9 ou enroulement principal du moteur 6 un courant positif redressé $I_E$ (courbes : B-figure 3 ; E-figure 4 ; H-figure 5) qui présente une composante continue créant dans le moteur 6 un champ ou flux magnétique continu ou constant, la composante continue dans l'enroulement statorique 8 ou enroulement auxiliaire de ce moteur 6 étant nulle du fait de la présence du condensateur 13 en série avec cet enroulement 8. Soumis à l'action d'un flux magnétique constant, l'enroulement en court-circuit du rotor de ce moteur 6 encore en rotation par inertie, fonctionne comme un enroulement d'un induit d'un alternateur et absorbe de la puissance mécanique et oppose par conséquent à ce rotor en mouvement un couple de freinage. Le couple de freinage est réglable comme dans le premier exemple par l'intensité du courant redressé envoyé dans l'enroulement statorique principal 9, laquelle est rendue ajustable entre une valeur maximale où le courant redressé est formé par des alternances positives entières et une valeur nulle où le courant redressé est nul, par le temps de retard à l'amorçage téta A ($\varphi_A$) (courbes : E,F-figure 4 ; H.K-figure 5) imposé à la gâchette $G_3$ du thyristor $T_3$. Ce temps de retard à l'amorçage téta A ($\varphi_A$) de la gâchette $G_3$ ainsi que la durée du freinage sont contrôlés par le circuit électronique ou microprocesseur 45.

Dans le cas où le tambour à linge 5 et son moteur d'entraînement 6 tournent à ce moment là dans le sens de rotation dit sens neutre $F_1$, lors d'une ouverture par inadvertance de la porte 4 du sèche-linge ou lors d'un ordre de commande d'arrêt du sèche-linge 1 par actionnement du bouton poussoir 26, le circuit électronique ou microprocesseur 45 interrompt l'alimentation du circuit 6 à travers le relais 43 qui le fait tourner dans le sens $F_1$, inverse le sens de rotation de ce moteur en $F_2$ ou dans le sens de rotation prédéterminé pour arrêt, en l'alimentant à travers le relais 44, met en oeuvre un processus préétabli de freinage ou d'arrêt, coupe le relais 44 et déclenche l'alimentation de l'enroulement 8 de ce moteur 6 en mode d'arrêt à travers le thyristor $T_3$ en envoyant dans sa gâchette $G_3$ un courant sous forme de signaux carrés périodiques à la fréquence de la source d'alimentation exposés dans un paragraphe précédent dès réception d'un top envoyé par le capteur de champ magnétique 31 du dispositif 27 de signalisation de position du tambour à linge 5.

Selon un quatrième exemple de réalisation non représenté, le sèche-linge 1 comprend un tambour à linge 5 entraîné par un moteur asynchrone 6 tournant dans les deux sens de rotation $F_1$ et $F_2$ et alimenté par des triacs $T_1$ et $T_2$ commandés en mode normal de fonctionnement ou en mode d'arrêt par un circuit électronique ou microprocesseur 18 comme dans le premier exemple. Cependant le sèche-linge 1 comprend deux dispositifs 27 de signalisation de position du tambour à linge 5. Ces deux dispositifs 27 comprennent deux aimants permanents analogues à l'aimant 29 fixés respectivement sur les deux bords des flasques 30 et 33 du tambour 5, en amont de la porte 7 de ce tambour par rapport respectivement aux deux sens de rotation $F_1$ et $F_2$ de ce tambour 5 et de son moteur d'entraînement 6, et deux capteurs de champ magnétique analogues au capteur 31 fixés sur la carrosserie 2, à proximité respectivement des bords des flasques 30 et 33 de ce tambour, parallèlement au trajet de ces aimants permanents en des points en amont de la porte 4 du sèche-linge 1 par rapport respectivement aux deux sens de rotation $F_1$ et $F_2$ de ce tambour 5 et son moteur d'entraînement 6. Les deux capteurs de champ magnétique des dispositifs de signalisation de position 27 émettent lors d'un passage de leurs aimants permanents associés, dans leur proximité, des tops destinés à déclencher par le circuit électronique ou microprocesseur 18 une alimentation électrique des triacs $T_1$ et $T_2$ en mode d'arrêt du moteur d'entraînement 6.

Ainsi dans un tel exemple, le tambour à linge 5 peut être arrêté aussi bien dans son sens de rotation $F_1$ que dans celui $F_2$ avec un bon alignement de sa porte 7 avec la porte 4 du sèche-linge 1. Cependant, dans le sèche-linge 1 de cet exemple, deux dispositifs 27 de signalisation de position du tambour à linge 5 sont indispensables, ce qui contribue à augmenter son prix de revient.

Selon un cinquième exemple de réalisation non représenté, le sèche-linge 1 comprend un tambour à linge 5 entraîné par un moteur asynchrone 6 tournant dans un seul sens de rotation $F_1$ ou $F_2$. Ce moteur est alimenté soit par un triac $T_1$ ou $T_2$ et un circuit électronique ou microprocesseur 18 associés et fonctionnant comme un interrupteur, en mode normal de fonctionnement en courant alternatif ou comme un interrupteur-redresseur en mode d'arrêt en courant du type redressé d'une manière analogue au premier exemple, soit par un relais électromécanique 43 en parallèle avec un commutateur statique tel qu'un thyristor $T_3$, et un circuit électronique ou microprocesseur 45 associés et fonctionnant comme un interrupteur, en mode normal de fonctionnement en courant alternatif ou comme un interrupteur-redresseur, en mode d'arrêt en courant du type redressé d'une manière analogue au troisième exemple. Dans ce cinquième exemple, le circuit électrique d'alimentation et de commande paraît plus simple que celui des exemples précédents mais le tambour à linge 5 ne tourne que dans un seul sens, ce qui donne un brassage du linge moins homogène que celui effectué dans les deux sens de rotation de ce tambour 5.

Grâce à un réglage à la fois du couple de freinage du moteur d'entraînement 6 par une modulation du temps de retard à l'amorçage des triacs $T_1$, $T_2$, et thyristor $T_3$ en fonctionnement en mode d'arrêt et du point de fixation de l'aimant permanent 29 du dispositif 27 de signalisation de position du tambour à linge par ajustement de sa position sur le bord de ce tambour, qui donne un top de déclenchement d'une alimentation de ces triacs et thyristor en mode d'arrêt, l'arrêt du sèche-linge 1 est rapide et obtenue suivant une grande fiabilité avec un bon alignement de la porte 7 du tambour 5 avec la porte 4 de l'appareil, indépendamment du sens de rotation de ce tambour.

Selon un sixième exemple de réalisation schématiquement et partiellement représenté à la figure 7, le sèche-linge comprend comme dans les premier (figure 2) et troisième exemples (figure 6) un tambour à linge 5 entraîné par un moteur électrique asynchrone 6 à deux enroulements statoriques 8 et 9 et tournant dans les mêmes sens de rotation $F_1$ et $F_2$ que ceux du moteur. Les enroulements statoriques 8 et 9 de ce moteur 6 sont branchés par le point commun 10 de leurs premières extrémités à travers un commutateur 55 à une borne $P_1$ d'une source de courant alternatif $P_1$ $P_2$ et par leurs deuxièmes extrémités 11 et 12, individuellement, à une deuxième borne $P_2$ de la source $P_1$ $P_2$ à travers respectivement deux commutateurs 50 et 51, les extrémités 11 et 12 étant respectivement connectées aux bornes d'un condensateur permanent ou capacité de démarrage 13.

Les commutateurs 50 et 51 sont constitués par des relais électromécaniques 53 et 54. Le commutateur 55 est constitué soit par un commutateur statique réversible du type triac soit par un commutateur formé d'un relais électromécanique 62 en parallèle duquel se trouvent en série un autre relais électromécanique 63 et une diode 64 (figure 8). Selon une variante de réalisation, une diode 65 peut être utilisée et montée entre la deuxième borne $P_2$ de la source d'alimentation $P_1$ $P_2$ et un point 14 situé entre le relais 63 et la diode 64 du commutateur 55, la diode 65 appelée diode "roue libre" étant représentée en points discontinus dans la figure 8. Les circuits de commande des commutateurs 53, 54,55 sont respectivement reliées aux sorties $S_6$, $S_7$, $S_8$ d'un circuit électronique ou microprocesseur 58 à travers le cas échéant des amplificateurs de courant 59,60,61.

Le circuit électronique ou microprocesseur 58 qui reçoit des données de l'état de fermeture ou d'ouverture d'un interrupteur de sécurité 25 de porte 4 du sèche-linge 1, celles d'un bouton poussoir 26 de commande d'arrêt de l'appareil, des données d'un dispositif 27 de signalisation de position du tambour à linge 5 et de capteurs de températures 28, fonctionne soit avec les relais électromécaniques 53,54 et le commutateur 55 comme un interrupteur-inverseur pour commander le moteur 6 et le faire tourner dans les deux sens, un sens de rotation dit sens neutre $F_1$, et un sens de rotation prédéterminé pour arrêt $F_2$ durant un fonctionnement normal du sèche-linge 1, soit avec un des relais 53 ou 54 en interrupteur inverseur et le commuateur 55 comme un interrupteur-redresseur dans un arrêt du sèche-linge 1, en alimentant ce moteur 6 suivant un processus préétabli de freinage ou d'arrêt 1.

A la fin d'un programme de fonctionnement choisi, ou lors d'une ouverture par inadvertance de la porte 4 du sèche-linge 1 à laquelle est associé l'interrupteur de sécurité 25 ou lors d'un ordre de commande d'arrêt du sèche-linge 1 par actionnement du bouton poussoir 26, le tambour à linge 5 et son moteur d'entraînement 6 tournent alors soit suivant leur sens de rotation dit sens neutre F₁ soit suivant leur sens de rotation prédéterminé pour arrêt ou freinage F₂.

Dans le cas où le tambour à linge 5 et son moteur 6 tournent à ce moment dans leur sens de rotation prédéterminé pour arrêt F₂, le circuit électronique ou microprocesseur 58 coupe alors l'alimentation du moteur 6 en courant alternatif par le relais 54 et le commutateur 55, dès qu'un top est envoyé par le capteur de champ 31 du dispositif 27 de signalisation de position du tambour à linge 5, puis alimente à traverse le relais 53 et le commutateur 55, l'enroulement statorique 8 ou enroulement principal de ce moteur 6, en courant redressé du type à simple alternance qui présente une composante continue créant dans le moteur 6 un champ ou flux magnétique continu ou constant, la composante continue dans l'enroulement statorique 9 ou enroulement auxiliaire de ce moteur 6 étant nulle du fait de la présence du condensateur 13 en série avec cet enroulement 9. Soumis à l'action d'un flux magnétique constant, l'enroulement en court-circuit du rotor de ce moteur 6 encore en rotation par inertie, fonctionne comme un enroulement d'un induit d'un alternateur et absorbe de la puissance mécanique et oppose par conséquent à ce rotor en mouvement un couple de freinage. Le moteur 6 s'arrête pratiquement instantanément et le tambour à linge 5 présente alors, sa porte 7 en bon alignement avec la porte 4 sèche-linge 1.

Dans le cas où le tambour à linge 5 et son moteur d'entraînement 6 tournent à ce moment là, dans le sens de rotation dit sens neutre F₁, le circuit électronique ou microprocesseur 58 interrompt après un temps de retard $T_R$, avec $T_R =$

$$\frac{2\pi - 2(\varphi_c + \varphi_s)}{\omega}$$

partant du top délivré par le capteur 31 du dispositif 27, l'alimentation en courant alternatif du moteur 6 à travers le relais 53 et le commutateur 55 qui le fait tourner dans le sens F₁, puis alimente simultanément le relais 54 et le commutateur 55 pour mettre en oeuvre un processus préétabli de freinage ou d'arrêt, qui déclenchent une alimentation de l'enroulement 9 de ce moteur 6 en courant redressé. Le moteur 6 et le tambour 5 s'arrêtent pratiquement instantanément, avec la porte 7 de ce tambour 5 en bon alignement avec la porte 4 du sèche-linge 1. Le temps de retard $T_R$ est déjà défini dans le premier exemple ci-dessus.

Dans cet exemple de réalisation, le courant redressé envoyé à travers le relais 54 et le commutateur 55 dans le moteur 6 pour l'arrêter n'est pas forcément réglable (commutateur 55 réalisé avec relais électromécanique) et un bon alignement de la porte 7 du tambour 5 à l'arrêt, avec la porte 4 du sèche-linge est réglé par un ajustement des positions de fixation des aimant permanent 29 et capteur de champ magnétique 31 du dispositif 27 de signalisation de position du tambour 5.

Dans un septième exemple de réalisation partiellement et schématiquement représenté dans la figure 9, le sèche-linge comprend des éléments analogues à ceux du premier exemple ci-dessus (figures 1 et 2) et indiqués par les mêmes numéros de références à l'exception du fait que le dispositif 27 de signalisation de position du tambour 5 est remplacé par un dispositif 70 de signalisation de position du tambour 5.

Le dispositif 70 de signalisation de position du tambour à linge 5 comprend deux aimants permanents 71, 72 fixés sur deux points angulairement espacés d'un angle φt prédéterminé d'un bord d'un flasque 30 de ce tambour 5, l'un 71 en aval et l'autre 72 en amont de la porte 7 de ce tambours 5 par rapport à un sens de rotation F2 de ce dernier choisi arbitrairement comme un sens de rotation pour arrêt ou freinage, la position du point de fixation de l'aimant 72 faisant un angle φS avec la position médiane 19 de la porte 7 de ce tambour et d'une manière identique à l'exemple de la figure 1 un capteur de champ magnétique 31 fixé sur la carrosserie 2 à proximité du bord de ce flasque 30 parallèlement au trajet de ces aimants 71, 72.

Dans cet exemple, le circuit électronique ou microprocesseur 18 est organisé de manière qu'à la fin d'un programme de fonctionnement choisi ou lors d'une ouverture par inadvertance de la porte du sèche-linge à laquelle est associé l'interrupteur de sécurité 25 ou lors d'un ordre de commande d'arrêt du sèche-linge 1 par actionnement d'un bouton poussoir 26, le tambour à linge étant alors par exemple en rotation dans le sens F2 prédéterminé pour arrêt, lorsque le premier aimant 71 passe devant le capteur 31, le capteur 31 envoie un premier top au circuit électronique ou microprocesseur 18 qui déclenche une coupure d'alimentation électrique de la gachette G2 du triac T2 (figure 2) et par conséquent celle du moteur d'entraînement 6. L'ensemble moteur-tambour décélère rapidement et dissipe une partie de son énergie potentielle. Ensuite, au passage du deuxième aimant 72 devant le capteur 31, le capteur 31 envoie un deuxième top au circuit électronique ou microprocesseur 18 qui déclenche une alimentation de la gachette G1 du triac T1 en courant sous forme de signaux carrés périodiques à la fréquence de la tension de la source d'alimentaiton, à durée préétablie et à retard à l'allumage prédéterminé (courbe C, figure 3). Le triac T1 envoie alors dans l'enroulement statorique 8 ou enroulement principal de ce moteur 6 un courant positif IE du type à simple alternance (courbe B, figure 3). Soumis à l'action d'un flux magnétique constant, l'enroulement en court circuit du rotor de ce moteur 6 oppose au rotor en mouvement un couple freinage qui est réglable par l'intensité ajustable du courant redressé IE envoyé par le triac T1 dans l'enroulement statorique 8 afin qu'à l'arrêt du tambour 5 la porte 7 de ce tambour est en bon alignement avec la porte 4 de l'appareil 1.

Selon cet exemple de réalisation, des fortes contraintes imposées au système de transmission du tambour 5 sont évitées lors d'un arrêt de ce tambour puisqu'une partie de l'énergie potentielle de l'ensemble "tambour 5-moteur 6" est déjà dissipée dans l'intervalle de temps entre deux tops envoyés par le capteur 31 ou intervalle de roue libre.

Les exemples de réalisation décrits ci-dessus montrent que, bien que le procédé d'arrêt de l'invention soit simple et mette en oeuvre seulement un nombre réduit de pièces composantes à faible coût, la fiabilité d'un bon alignement de la porte 4 du sèche-linge avec la porte 7 tambour à linge 5 à l'arrêt, n'est pas compromise.

Dans le cas d'un appareil où un fort balourd s'est formé dans son tambour à l'arrêt, il se peut que ce tambour ne se maintienne pas d'une manière stable dans sa position d'arrêt obtenue où sa porte est en bon alignement avec la porte de l'appareil. Pour éviter un tel inconvénient, un moyen simple de blocage en position arrêtée peut être monté dans cet appareil. Ce moyen peut être par exemple un moyen électromécanique tel qu'un électro-aimant dont une partie saillante du noyau mobile vient s'insérer dans une rainure ou fente coopérante prévue à cet égard dans ce tambour. Au repos, la bobine de l'électro-aimant n'étant pas alimentée ou misse sous tension, un ressort pousse le noyau de l'électro-aimant, engage sa partie saillante dans la rainure ou fente coopérante du tambour et maintient ainsi le tambour dans la position d'arrêt désirée. Au démarrage de l'appareil, la bobine de l'électro-aimant qui est également alimentée simultanément en courant provoque le retrait de son noyau à l'encontre de la poussée du ressort, le dégagement de la partie saillante de ce noyau, de la rainure ou fente coopérante du tambour et la libération de ce tambour. Le courant est maintenu pendant le fonctionnement de l'appareil et coupe seulement à la fin du processus d'arrêt de l'appareil sous la commande d'un circuit électronique ou microprocesseur.

## Revendications

1. Procédé d'arrêt positionné d'un appareil (1) muni d'un tambour horizontal (5) entraîné en rotation par un moteur électrique asynchrone (6), comportant une interruption d'une alimentation en mode normal de fonctionnement de ce moteur électrique d'entraînement (6) en courant alternatif puis une alimentation électrique de ce moteur en mode d'arrêt, par injection dans ce dernier encore en rotation par inertie d'un courant électrique du type de courant redressé présentant une composante continue y créant un freinage électromagnétique, caractérisé en ce qu'il comprend une signalisation de la position du tambour (5), une interruption d'une alimentation électrique en mode normal de fonctionnement du moteur électrique d'entrainement (6) et une alimentation en mode d'arrêt de ce moteur électrique dans laquelle (6), le courant électrique injecté dans ce dernier est un courant du type redressé représentant une composante continue réglable y créant un freinage électromagnétique à puissance ajustable réalisant à l'arrêt de ce moteur (6) et ce tambour (5), un bon alignement de la porte (7)

de ce tambour (5) avec la porte (4) de l'appareil (1).

2. Procédé selon la revendications 1, caractérisé en ce qu'il comprend une alimentation électrique du moteur (6) d'entraînement du tambour (5) au moyen d'au moins un triac ($T_1$, $T_2$) dont la gâchette ($G_1$, $G_2$) est alimentée en continu en courant électrique positif ou négatif selon le triac choisi, ou en courant sous forme de signaux carrés périodiques ayant une fréquence double de celle de la tension de la source d'alimentation électrique et synchrones avec les passages à zéro de cette même tension, durant une alimentation en courant alternatif en mode normal de fonctionnement de ce moteur (6), et en courant électrique positif ou négatif selon le triac choisi, sous forme de signaux carrés périodiques à la fréquence de la souce d'alimentation électrique, à durée réglable (C,F,K) et à début avec un temps de retard téta A ($\theta$ A) ajustable vis-à-vis de celui de la tension appliquée aux bornes de ce triac, durant une alimentation en mode d'arrêt de ce moteur (6) en courant du type redressé.

3. Procédé selon la revendications 1, caractérisé en ce qu'il comprend une alimentation électrique du moteur (6) d'entraînement du tambour (5) au moyen d'au moins d'une part un relais électromécanique (44) durant une alimentation en courant alternatif en mode normal de fonctionnement de ce moteur (6) et d'autre part un commutateur statique du type thyristor ($T_3$) dont la gâchette ($G_3$) est alimentée en courant électrique positif ou négatif sous forme de signaux carrés périodiques à la fréquence de la source d'alimentation électrique, à durée réglable (C,F,K,) et à début avec un temps de retard téta A ($\theta$ A) ajustable vis-à-vis de celui de la tension appliquée aux bornes de ce commutateur statique, durant une alimentation en mode d'arrêt de ce moteur (6) en courant du type redressé.

4. Procédé selon la revendication 1, caractérisé en ce qu'il comprend une alimentation électrique du moteur (6) d'entraînement du tambour à linge (5) au moyen d'au moins d'une part un relais électromécanique (53,54) et un commutateur (55) fonctionnant en interrupteur inverseur durant une alimentation en courant alternatif en mode normal de fonctionnement de ce moteur (6) et d'autre part un relais électromécanique (53, 54) un commutateur (55), fonctionnant en interrupteur redresseur durant une alimentation en mode d'arrêt de ce moteur, en courant redressé, le commutateur (55) associés aux relais électromécaniques (53,54) étant choisi parmi un triac, un commutateur formé d'un relais électromécanique (62) en parallèle duquel se trouvent en série un autre relais électromécanique (63) et une diode (64) et facultativement une diode "roue libre" (65) connectée au point (14) située entre cet autre relais (63) et cette diode (64).

5. Machine à laver et/ou à sécher le linge mettant en oeuvre le procédé de l'une des revendications 1 à 3, ayant une ouverture (3) fermée par une porte (4) et un tambour (5) pourvu d'une porte (7) et ayant pour un entraînement de son tambour à linge (5) un moteur asynchrone (6) du type à condensateur permanent (13) muni de deux enroulements statoriques (8,9) et d'un enroulement rotorique en court-circuit, caractérisée en ce qu'elle comprend d'une part au moins un dispositif (27) de signalisation de position du tambour à linge (5) ayant un aimant permanent (29) fixé sur un bord d'un flasque (30) en amont de la porte (7) de ce tambour par rapport au sens de rotation de ce dernier, et un capteur de champ magnétique (31) fixé sur la carrosserie (2) de la machine à proximité et parallèlement au trajet de cet aimant, la position du point de fixation de l'aimant (29) faisant un angle $\varphi_S$ avec la position médiane (19) de la porte (7) du tambour (5), la position du point de fixation du capteur (31) faisant un angle $\varphi_C$ avec la position médiane (17) de l'ouverture (3) de la porte (4) de la machine, et la position médiane (19) de la porte (7) du tambour (5) définissant avec la position médiane (17) de l'ouverture (3) de la porte (4) de la machine, un angle alpha ($\alpha$), et d'autre part un circuit électronique ou microprocesseur (18) et un triac ($T_1$ ou $T_2$) associés et fonctionnant comme un interrupteur pour alimenter, en mode normal de fonctionnement, en courant alternatif les deux enroulements statoriques (8 et 9) de ce moteur (6), durant un fonctionnement normal de la machine, ou comme un interrupteur-redresseur pour alimenter un de ces enroulements (8 ou 9) en mode d'arrêt en courant électrique du type redressé réglable, à la fin d'un programme de fonctionnement choisi ou lors d'un ordre d'arrêt de la machine et dès qu'un top est envoyé à ce circuit électronique ou microprocesseur (18) par le capteur de champ magnétique (31) à un passage de l'aimant permanent (29) de ce dispositif (27) de signalisation de position de ce tambour à linge (5).

6. Machine selon la revendication 5, ayant un tambour à linge (5) et son moteur d'entraînement (6) tournant dans les deux et mêmes sens ($F_1$ et $F_2$), caractérisée en ce qu'elle comprend un circuit électronique ou microprocesseur (18) et deux triacs ($T_1$ et $T_2$) associés et fonctionnant soit comme un interrupteur-inverseur pour alimenter, en mode normal de fonctionnement en courant alternatif les deux enroulements statoriques (8 et 9) de ce moteur (6) pour le faire tourner dans les deux sens ($F_1$ et $F_2$) durant un fonctionnement normal de la machine, soit un interrupteur-redresseur pour alimenter un de ces deux enroulements (8 ou 9) comme enroulement principal de ce moteur (6), en mode d'arrêt un courant électrique du type redressé réglable, à la fin d'un programme de fonctionnement choisi ou lors d'un ordre d'arrêt de la machine et dès qu'un top est envoyé à ce circuit électronique ou microprocesseur (18) par le capteur de champ magnétique (31) à un passage de l'aimant permanent (29) de ce dispositif (27) de signalisation de position de ce tambour à linge (5).

7. Machine à laver et/ou sécher le linge mettant en oeuvre le procédé de l'une des revendications 1 à 3, ayant une ouverture (3), fermée par une porte (4) et un tambour (5) pourvu d'une porte (7) et ayant pour un entraînement de son tambour à linge (5) un moteur asynchrone (6) du type à condensateur permanent (13) muni de deux enroulements statoriques (8,9) et d'un enroulement rotorique en court-circuit, caractérisée en ce qu'elle comprend d'une part au moins un dispositif (27) de signalisation de position du tambour à linge (5) ayant un aimant permanent (29) fixé sur un bord d'un flasque (30) en amont de la porte (7) de ce tambour par rapport au sens de rotation de ce dernier et un capteur de champ magnétique (31) fixé sur la carrosserie (2) de la machine, à proximité et parallèlement au trajet de cet aimant, la position du point de fixation de l'aimant (29) faisant un angle $\varphi_S$ avec la position médiane (19) de la porte (7) du tambour (5) la position du point de fixation du capteur (31) faisant un angle $\varphi_C$ avec la position médiane (17) de l'ouverture (3) de la porte (4) de la machine et la position médiane (19) de la porte (7) du tambour (5) définissant avec la position médiane (17) de l'ouverture (3) de la porte (4) de la machine un angle alpha ($\alpha$), et d'autre part un circuit électronique ou microprocesseur (45), un relais électromécanique (44) et un commutateur statique du type thyristor ($T_3$) en parallèle sur ce relais, associés et fonctionnant comme un interrupteur pour alimenter en mode normal de fonctionnement, en courant alternatif les deux enroulements statoriques (8,9) de ce moteur (6), durant un fonctionnement normal de la machine, et comme un interrupteur-redresseur pour alimenter un de ces enroulements (8 ou 9) comme un enroulement principal en mode d'arrêt, en courant électrique du type redressé réglable, à la fin d'un programme de fonctionnement choisi ou lors d'un ordre d'arrêt de la machine, et dès qu'un top est envoyé à ce circuit électronique ou microprocesseur (45), par le capteur du champ magnétique (31) à un passage de l'aimant permanent (29) de ce dispositif (27) de signalisation de position de ce tambour à linge (5).

8. Machine selon la revendication 7, ayant un tambour à linge (5) et son moteur d'entraînement (6) tournant dans les deux et mêmes sens ($F_1$ et $F_2$), caractérisée en ce qu'elle comprend un circuit électronique ou microprocesseur (45) et deux relais électromécaniques (43,44) dont l'un muni d'un commutateur statique du type thyristor ($T_3$) en parallèle, associés et fonctionnant soit comme un interrupteur-inverseur pour alimenter en mode normal de fonctionnement en courant alternatif les deux enroulements statoriques (8,9) de ce moteur (6) pour le faire tourner dans les deux sens ($F_1$, $F_2$) durant un

fonctionnement normal de la machine, soit comme un interrupteur-redresseur pour alimenter un de ces deux enroulements (8 ou 9) comme enroulement principal de ce moteur (6) en mode d'arrêt, en courant électrique du type redressé réglable, à la fin d'un programme de fonctionnement choisi ou lors d'un ordre d'arrêt de la machine et dès qu'un top est envoyé à ce circuit électronique ou microprocesseur (18) par le capteur de champ magnétique (31) à un passage de l'aimant permanent (29) de ce dispositif (27) de signalisation de position de ce tambour à linge (5).

9. Machine à laver et/ou sécher le linge linge mettant en oeuvre le procédé de l'une des revendications 1 et 4, ayant une ouverture (3) fermée par une porte (4) et un tambour (5) pourvu d'une porte (7) et ayant pour un entraînement de son tambour à linge (5) un moteur asynchrone (6) du type à condensateur permanent (13) muni de deux enroulements statoriques (8,9) et d'un enroulement rotorique en court-circuit, caractérisée en ce qu'elle comprend d'une part au moins un dispositif (27) de signalisation de position du tambour à linge (5) ayant un aimant permanent (29) fixé sur un bord d'un flasque (30) en amont de la porte (7) de ce tambour par rapport au sens de rotation de ce dernier, et un capteur de champ magnétique (31) fixé sur la carrosserie (2) de la machine à proximité et parallèlement au trajet de cet aimant, la position du point de fixation de l'aimant (29) faisnat un angle $\varphi_s$ avec la position médiane (19) de la porte (7) du tambour (5), la position du point de fixation du capteur (31) faisant un angle $\varphi_c$ avec la position médiane (17) de l'ouverture (3) de la porte (4) de la machine, et la position médiane (19) de la porte (7) du tambour (5) définissant avec la position médiane (17) de l'ouverture (3) de la porte (4) de la machine, un angle alpha ($\alpha$), et d'autre part un circuit électronique ou microprocesseur (58), au moins un relais électromécanique (53,54) et un commutateur (55) associés et fonctionnant comme un interrupteur pour alimenter en mode normal de fonctionnement, en courant alternatif les deux enroulements statoriques (8,9) de ce moteur (6) durant un fonctionnement normal de la machine, et comme un interrupteur-redresseur pour alimenter un de ces enroulements (8 ou 9) comme enroulement principal en mode d'arrêt, en courant électrique du type redressé, à la fin d'un programme de fonctionnement choisi ou lors d'un ordre d'arrêt de la machine, et dès qu'un top est envoyé à ce circuit électronique ou microprocesseur (58), par le capteur de champ magnétique (31) à un passage de l'aimant permanent (29) de ce dispositif (27) de signalisation de positions de ce tambour à linge (5).

10. Machine selon la revendication 9, ayant un tambour à linge (5) et son moteur d'entraînement (6) tournant dans les deux et mêmes sens ($F_1$ et $F_2$) caractérisée en ce qu'elle comprend un circuit électronique ou microprocesseur (58), deux relais électromécaniques (53,54) et un commutateur (55) associés et fonctionnant soit comme un interrupteur-inverseur pour alimenter en mode normal de fonctionnement en courant alternatif les deux enroulements statoriques (8,9) de ce moteur (6) pour le faire tourner dans les deux sens ($F_1$, $F_2$) durant un fonctionnement normal de la machine, soit comme un interrupteur-redresseur pour alimenter un de ces deux enroulements (8 ou 9) comme enroulement principal de ce moteur (6) en mode d'arrêt, en courant électrique du type redressé, à la fin d'un programme de fonctionnement choisi ou lors d'un ordre d'arrêt de la machine, et dès qu'un top est envoyé à ce circuit électronique ou microprocesseur (18) par le capteur de champ magnétique (31) à un passage de l'aimant permanent (29) de ce dispositif (27) de signalisation de position de ce tambour à linge (5), les deux relais électromécaniques (53,54) étant montés entre le moteur (6) et l'une ($P_2$) des bornes d'une source d'alimentation électrique ($P_1,P_2$) et le commutateur (55) étant branchés entre ce moteur (6) et l'autre borne ($P_1$) de cette source d'alimentation électrique ($P_1,P_2$).

11. Machine à laver et/ou à sécher le linge mettant en oeuvre le procédé de l'une des revendications 1 et 2, ayant une ouverture (3) formée par une porte (4) et un tambour (5) pourvu d'une porte (7) et ayant pour un entraînement de son tambour à linge (5), un moteur asynchrone (6) du type à condensateur permanent (13) muni de deux enroulements statoriques (8, 9) et d'un enroulement rotorique en court-circuit, caractérisée en ce qu'elle comprend d'une part un dispositif (70) de signalisation de position du tambour à linge (5) ayant deux aimants permanents (71, 72) fixés sur deux points d'un bord d'un flasque (30) de ce tambour angulairement espacés d'un angle ( t) prédéterminé, le premier (71) en aval et le deuxième (72) en amont de la porte (7) de ce tambour par rapport à un sens de rotation (F2) de ce dernier, la position du point de fixation du deuxième aimant (72) faisant un angle ($\varphi S$) avec la position médiane (19) de la porte (7) de ce tambour et un capteur de champ magnétique (31) fixé sur la carrosserie (2) de la machine à proximité et parallèlement au trajet de ces aimants, la position du point de fixation du capteur (31) faisant un angle ($\varphi C$) avec la position médiane (17) de l'ouverture (3) de la porte (4) de la machine et la position médiane (19) de la porte (7) du tambour (5) définissant avec la position médiane (17) de l'ouverture (3) de la porte (4) de la machine, un angle ($\alpha$), et d'autre part un circuit électronique ou microprocesseur (18) et deux triacs (T1, T2) associés fonctionnant comme un inverseur interrupteur dont l'un (T2) fonctionnant comme un interrupteur à la fin d'un programme de fonctionnement choisi ou lors d'un ordre d'arrêt de la machine et dès qu'un top est envoyé à ce circuit électronique ou microprocesseur (18) par le capteur (31) à un passage du premier aimant (71) du dispositif (70) de signalisation de position du tambour (5) et l'autre (T1) fonctionnant comme un interrupteur-redresseur pour alimenter un des enroulements (8 ou 9) de ce moteur (6) en mode d'arrêt en courant électrique du type redressé réglable, à la fin d'un programme de fonctionnement choisi ou lors d'un ordre d'arrêt de la machine et dès qu'un top est envoyé à ce circuit électronique ou microprocesseur (18) par le capteur de champ magnétique (31) à un passage du deuxième aimant (72) de ce dispositif (70) de signalisation de position de ce tambour à linge (5).

FIG.9

FIG.1

FIG.2

# FIG.3

# FIG.4

FIG.5

FIG.6

FIG_8

FIG.7

EP 0 337 827 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 442 291 (ESSWEIN) <br> * page 4, ligne 18 - page 5, ligne 32; figure * <br> --- | 1,2,5,6 | H 02 P 3/24 <br> D 06 F 37/30 |
| Y | PATENT ABSTRACTS OF JAPAN <br> vol. 10, no. 42 (E-382)(2099), 19th février 1986; & JP - A - 60 197 180 (TAITETSUKU K.K.) 05-10-1985 <br> --- | 1,2,5,6 | |
| Y | PATENT ABSTRACTS OF JAPAN <br> vol. 8, no. 261 (E-281)(1698), 30 novembre 1984; & JP - A - 59 132 788 (MATSUSHITA) 30-07-1984 <br> --- | 1,2,5,6 | |
| A | DD-B- 118 208 (UZBEXKY NAUCHNO-ISSLEDOVATELSKY INSTITUT ENERGETIKI I AVTOMATCKI) <br> * figure * <br> --- | 8,10 | |
| A | FR-A-2 356 759 (SIEMENS AG) <br> * page 7, ligne 25 - page 8, ligne 18, figure 4 * <br> ----- | 1,9,11 | DOMAINES TECHNIQUES RECHERCHES (Int. Cl.4) <br><br> H 02 P 3/00 <br> D 06 F 37/00 |

**Le présent rapport a été établi pour toutes les revendications**

| Lieu de la recherche | Date d'achèvement de la recherche | Examinateur |
|---|---|---|
| BERLIN | 27-06-1989 | LEOUFFRE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................

& : membre de la même famille, document correspondant

EPO FORM 1503 03.82 (P0402)